# EUROPEAN PATENT APPLICATION

(11) **EP 3 402 050 A1**
(43) Date of publication of application: **14.11.2018**
(21) Application number: 17170762.3
(22) Date of filing: 12.05.2017
(51) Int. Cl.: H02K 3/40, H01F 5/06, H01B 3/00, H02K 15/04

(54) **INSULTATED WIRE OF A COIL FOR A RANDOM-WOUND STATOR**

(71) Applicant: ABB Schweiz AG, 5400 Baden (CH)
(72) Inventor: SAHLÉN, Fredrik, 723 49 Västerås (SE); PAULSSON, Göran, 725 91 Västerås (SE); HO, Chau Hon, 79540 Lörrach (DE); ZHAO, Su, 723 56 Västerås (SE)
(74) Representative: Savela, Reino Aleksi

(57) **Abstract**

A winding wire (1) of a coil for a random-wound stator (20) is provided. The winding wire (1) comprises a conductor (2), an insulation layer (3) surrounding the conductor (2) along a longitudinal direction thereof and a conductive layer (4) surrounding the insulation layer (3) along a longitudinal direction thereof. Whereby the conductive layer (4) has a volume resistivity in the range of 0,1 - 10.000 ohm cm. The corresponding manufacturing method (30) of such a winding wire (1) and a random-wound stator (20) is provided. The random-wound stator (20) comprises a stator body (21) and random wound coils (10) out of such winding wires (1).

## Description

### Technical field

Embodiments disclosed herein relate to a winding wire for a random-wound stator, a random-wound stator and a method of manufacturing a winding wire for a random-wound stator.

### Background

A coil for use in, for instance, a low-voltage motor/generator can be either random-wound or form wound. The form-wound coils are more expensive to produce than random-wound coils, since the latter allows a higher degree of automation to be used during manufacturing. The random-wound technology is therefore preferred since it reduces the overall costs. However, a limiting factor for using this technology is the relatively low partial discharge inception voltage (PDIV). At voltages in the range of approximately 700 to 1000 V the electric field in the air adjacent to the winding wire will no longer hold dielectrically and corona or discharges will occur. These discharges will deteriorate the insulation material of the winding wire, ultimately leading to insulation failure.

For the above reason, the form-wound coils are used in applications above 1000 V. Conventionally, a mica-based insulation material, which is designed to endure the discharges, is then used. This further increases the cost of form-wound coils.

### Summary of the invention

An objective of the present invention is to address and improve various aspects related to winding wires and the manufacturing and use thereof. A particular objective is to provide a highly reliable winding wire for various applications, such as motors, while also enabling a cost-efficient production thereof. A particular objective is to ensure reliable use of the winding wire in various applications. Another particular objective is to enable an improved cooling in applications using the winding wire. Still another particular objective is to ensure a reliable grounding of the winding wire when in use.

These objectives and others are achieved by the winding wire, a random-wound stator comprising a stator and random wound coils, and a method of manufacturing a winding wire according to the appended independent claims, and by the embodiments according to the dependent claims.

The objective is according to an aspect achieved by a winding wire for a random-wound stator. The winding wire comprises a conductor, and an insulation layer surrounding the conductor along a longitudinal direction thereof. The winding wire comprises a conductive layer surrounding the insulation layer along a longitudinal direction thereof, wherein the conductive layer has a volume resistivity in the range of 0 - 10 000 ohm cm.

The conductive layer enables proper grounding of the winding wire and encloses the electric field inside the insulation layer, whereby corona and discharges are effectively avoided. The conductive layer enables stator coils to be produced by means of random-wound technology at higher voltages than currently used, which highly reduces manufacturing costs.

In an embodiment, the conductive layer of the winding wire has a thickness in the range of 10-100 µm, such as in the range of 20 - 80 µm, or in the range of 25 - 50 µm. The conductive layer can be kept thin, enabling a large amount of copper to be applied in the stator slots.

In various embodiments, the conductive layer has a volume resistivity in the range of 0 - 1000 ohm cm, such as in the range of o. 1 - 1000 ohm cm, in the range of 1-1000 ohm cm, or in the range of 10 - 100 ohm cm.

In various embodiments, the conductive layer is made of a semi-conductive material, for instance a polymer matrix filled with conductive additives, such as carbon based particles (carbon black, graphene, carbon nanotubes) or metal/metal oxide particles or other conductive materials, where the polymer matrix preferably consists of the same polymer as the insulation layer enabling good adhesion between the conductive layer and the insulation layer.

In various embodiments, both the polymer matrix and the insulation comprise a same polymer. By using the same polymer for both the polymer matrix and the insulation the adhesion properties are optimized and cracks are avoided. However, in other embodiments, the polymer matrix and the insulation comprise different polymer.

In various embodiments, the insulation layer is made of one of: polyetheretherketons, PEEK, polyetherimides, PEI, polyetherketons, PEK, polyphenylensulfide, PPS, polyphenylensulphone, PPSU, polysulphone, PSU, polyethersulphone, PES, polytetrafloroetylene, PTFE, polyvinylidenfloride, PVF. The insulation layer made of one of these materials gives a highly reliable insulation without defects, having a high dielectric strength while also enables keeping the insulation layer thin. Further, the mechanical properties of the insulation layer are rendered such that the insulation layer is kept intact during wire manufacturing, coil manufacturing as well as during operation of, for instance, the motor.

In various embodiments, an end of the winding wire is provided with a field grading means. In different embodiments, the field grading means comprises one or more of: a shrinkage tube with field grading means, a non-linear field grading paint, a linear field grading paint, and a geometric field grading. By providing the ends of the winding wire with a carefully designed end termination, electric field concentrations are avoided at these ends when preparing the winding wire for connection to a voltage supply.

The objective is according to an aspect achieved by a random-wound stator comprising a stator and random wound coils, wherein each random wound coil comprises a winding wire according to any of the above embodiments.

In various embodiments, the random-wound stator is impregnated by an impregnation resin comprising a conductive additive. The conductive additive may, for instance, comprise carbon based particles, such as carbon black, graphene, carbon nanotubes, or metal particles or metal oxide particles. The thermal and/or electrically conductive resin enhances the cooling capability of the random-wound stator and improves the securing of the grounding of the winding wire.

In variations of the above embodiments, the resin has a volume resistivity in the range of 1 - 10 000 ohm cm.

In various embodiments, each slot of the stator comprises a conductive slot liner for mechanical protection of the winding wire. Making the slot liner of a conductive material secures sufficient grounding of the winding wire to a stator core.

The objective is according to an aspect achieved by a method of manufacturing a winding wire for a random-wound stator. The method comprises obtaining a conductor, applying an insulation layer such as to surround the conductor along a longitudinal direction thereof, and applying a conductive layer surrounding the insulation layer with a volume resistivity in the range of 0 - 10000 ohm cm along a longitudinal direction thereof.

In an embodiment, the applying of the insulation layer and the conductive layer are performed in a co-extrusion process. By co-extrusion the insulation layer and outer conductive layer are simultaneously formed where a highest possible quality is obtained.

Further features and advantages of the embodiments of the present teachings will become clear upon reading the following description and the accompanying drawings.

### Brief description of the drawings

Figure 1 illustrates in a cross-sectional view a winding wire according to the invention.
Figure 2 is a flow chart showing steps of a method for manufacturing a winding wire according to the invention.
Figure 3 illustrates a winding wire in shape of a coil.
Figure 4 illustrates part of a random-wound stator.
Figures 5a and 5b illustrate electric fields for a winding wire according to the invention with and without end termination, respectively.

### Detailed description

In the following description, for purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail. Same reference numerals refer to same or similar elements throughout the description.

Briefly, according to the invention, a winding wire is provided with a conductive layer. This new type of winding wire allows stator coils to be manufactured by a random-wound technology for applications having higher operating voltages than what is possible according to prior art. That is, the new design of the winding wire enables the currently used form-wound technology to be replaced with the less costly random-wound technology for applications with voltage levels up to around 3000 V.

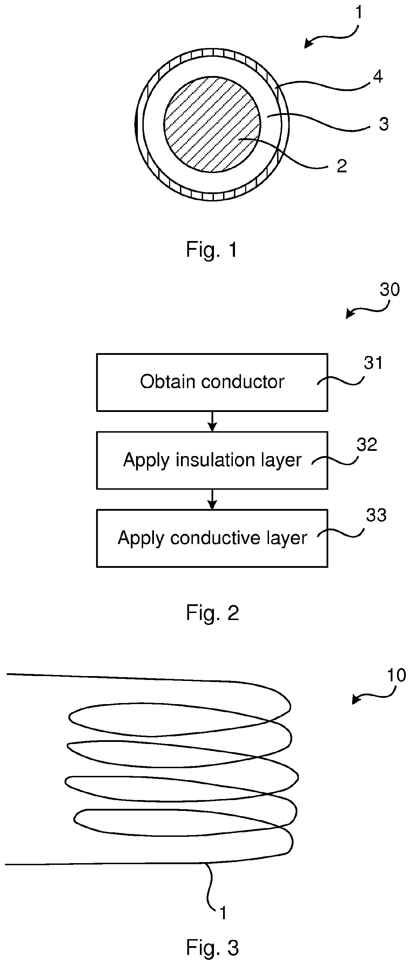

Figure 1 illustrates in a cross-sectional view a winding wire according to the invention. The winding wire 1 comprises an electrical conductor 2 in the form of a wire, in particular a metal wire made preferably of a pure metal, such as, for instance, copper or aluminum. The winding wire 1 may have a circular cross section, which facilitates the desired manufacturing by using random-wound technology. A circular cross-section is preferred in order to minimize the electric field across the insulation layer, but it is noted that the cross section of the winding wire 1 may have also other shapes. In the case of a circular cross section the cross section has a diameter within the range of 0.5 to 5 mm, such as within the range of 1 to 2 mm. In the case of a cross section in another shape, the cross section has a maximum linear dimension within the range of 0.5 to 5 mm, such as within the range of 1 to 2 mm.

The winding wire 1 comprises an insulation layer 3 surrounding the conductor 2 in the longitudinal direction thereof. The thickness of the insulation layer 3 may, for instance, be about 100 - 200 µm (also denoted microns). However, the insulation thickness may be selected and adapted in dependence on the applied voltage during operation. The insulation layer 3 is made of a material with a high dielectric strength, i.e. the material should have a high ability to withstand the maximum electrical field without failure of its insulating properties. An insulating material fulfilling these requirements is high performance thermoplastic, which has high thermo-mechanical properties, such as e.g. polyetheretherketons (PEEK), polyetherimides (PEI), polyetherketons (PEK), polyphenylensulfide (PPS), polyphenylensulphone (PPSU), polysulphone (PSU), polyethersulphone (PES), polytetrafloroetylene (PTFE) or polyvinylidenfloride (PVF). The requirement on high dielectric strength also enables keeping the insulation layer 3 thin. The dielectric strength of the insulation layer 3 may, for instance, be about 10 kV/mm and its thickness may, for instance, be about 100 µm.

The mechanical properties of the insulation layer 3 have to be such that the insulation layer 3 is kept intact even during mechanical stress. No defects can be allowed to appear therein due to mechanical stress that might occur when, for instance, bending the winding wire 1 into a coil. To avoid these defects it is necessary to have good adhesion between the conductor 2 and the insulation layer 3 as well as between the insulation 3 and a conductive layer 4. This requirement is met, for instance, by the earlier mentioned materials PEEK and PEI.

It is noted that more than one insulation layer 3 may be applied, i.e. the winding wire 1 may comprise an insulation system comprising two or more insulation layers. However, material costs and the geometric dimensions of the winding wire in use (e.g. as coil) can be kept down when using a single insulation layer. In the various described embodiments, an insulation system comprising a single insulation layer 3 is used as an illustrative example.

As mentioned earlier, the winding wire 1 is provided with a conductive layer 4. The conductive layer 4 may also be denoted an outer screen. The conductive layer 4 may comprise a semi-conductive material, such as e.g. a polymer matrix filled with conductive additives, such as carbon based particles (e.g. carbon black, graphene, carbon nanotubes) or metal/metal oxide particles or other conductive materials. Preferably, the polymer matrix consists of the same polymer as the insulation layer enabling good adhesion between the conductive layer and the insulation layer. The conductive layer 4 is arranged such as to surround the insulation layer 3 in the longitudinal direction thereof, the outer conductive layer 4 hence also surrounding the conductor 2. The conductive layer 4 may, for instance, be in the range of 10-100 microns thick, preferably about 20 - 80 µm, or more preferably about 25 - 50 microns thick, and have a volume resistivity in the range of 0 - 10 000 ohm cm, such as in the range of 0 - 1000 ohm cm, 0.1 - 1000 ohm cm, 1 - 1000 ohm cm, or 10 to 100 ohm cm. The conductivity of the conductive layer 4 enables proper grounding of the winding wire 1 and encloses the electric field inside the insulation layer 3. Thereby corona or discharges are avoided on the surface of the winding wire 1.

The winding wire 1 is suitable for coils in a variety of applications, e.g. for low voltage motors and traction motors. For the winding wire 1 to be used in these applications, the thermal properties of the insulation layer 3 has to meet current IEC thermal class 180°C for industrial motors, and at least thermal class 200°C for traction motors.

The winding wire 1 according to the present invention allows random-wound technology to be used also for these applications. A particular example on an application benefitting from using the winding wire 1 according to the invention, is traction motors, where the motors for 1500 V direct current-link voltage are today made with form-wound technology. Owing to the reduced manufacturing costs of the stator coils, the present invention enables a more cost effective solution also for the manufacturing of these traction motors. The traction motor application is, as noted, a high temperature application (e.g. at least 200°C), and requires high performance thermoplastics in the insulation layer, such as the mentioned PEEK or PEI.

As noted earlier, the insulation layer 3 has to be free from defects. The coating technology that is currently used cannot be used for manufacturing the insulation layer 3, since this coating technology always introduces pinholes in the insulation layer. Such pinholes would enable flow of current through the insulation layer 3, i.e. from the conductor 2 to the conductive layer 4.

A method for manufacturing a winding wire is provided, which addresses inter alia the above issue.

Figure 2 is a flow chart showing steps of a method for manufacturing a winding wire for a random-wound stator according to the invention.

In step 31, a conductor 2 is obtained. The conductor 2 may, for instance, be produced by wire drawing, wherein a metal material is drawn through a series of dies of decreasing size. In other embodiments, the metal wire is produced by extrusion. It is noted that other metalworking processes may be used or the conductor wire may be purchased from an external source.

In step 32, the insulation layer 3 is applied to the conductor 2. In contrast to the conventionally used coating baths for applying the insulation layer, the method 30 for manufacturing the winding wire 1 according to the present invention preferably utilizes extrusion. This is preferred in order to ensure that the insulation layer 3 is free from defects. However, the insulation layer 3 may be applied in other manners as well, e.g. by powder coating, provided that the requirement of a defect free insulation layer can be fulfilled.

In some embodiments, the conductive layer 4 is also applied in step 32. Step 32 then comprises co-extruding the insulation layer 3 and the conductive layer 4.

In other embodiments, only the insulation layer 3 is applied in step 32, and in step 33 the conductive layer 4 having a volume resistivity in the range of 0 - 10000 ohm cm is applied.

The insulation layer 3 and the outer conductive layer 4 may thus, in different embodiments, be extruded consecutively or in a co-extrusion process. In preferred embodiments, the insulation layer 3 and the outer conductive layer 4 are co-extruded shaping the insulation layer 3 and outer conductive layer 4 simultaneously, as this is believed to give the highest quality.

In various other embodiments, the outer conductive layer 4 may be applied by coating, by painting or by spraying.

Figure 3 illustrates a winding wire 1 in the shape of a coil 10. By providing the winding wire 1 with the conductive layer 4, the winding wire 1 can be used in random-wound technologies to produce e.g. a coil 10 for, for instance, the mentioned traction motor application.

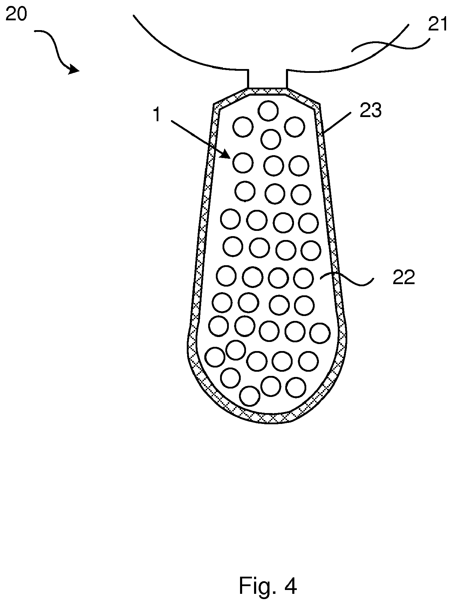

Figure 4 illustrates part of a random-wound stator 20. The random-wound stator 20 comprises a stator body 21 (also denoted stator frame) and a number of coils, each coil having a number of turns of the winding wire 1. The winding wire turns have a random location in the random-wound stator 20, i.e. the coils are random-wound. The coils are arranged in stator slots 22, which in turn are provided with stator liners 23.

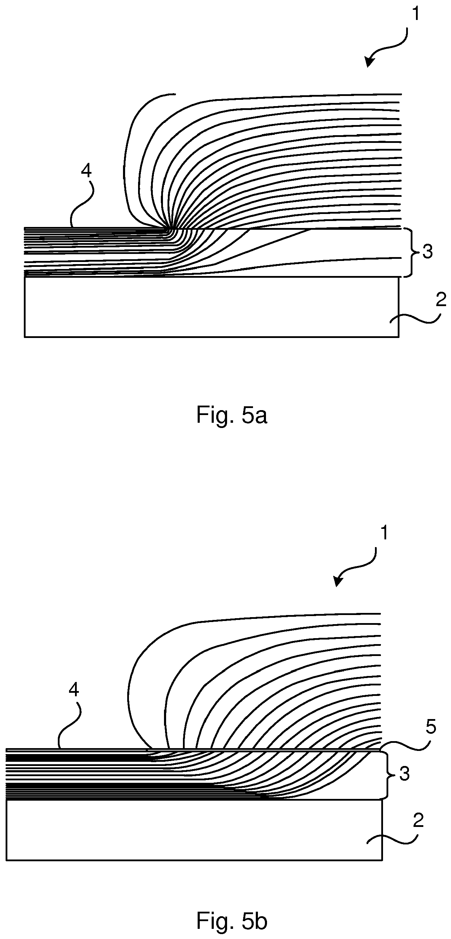

Figures 5a and 5b illustrate electric fields for a winding wire according to the invention with and without an end termination, respectively. These figures illustrate a particular design challenge occurring at the winding wire 1 endings, where high electric fields may occur. Depending on the voltage level of the application in which the winding wire is to be used and on the thickness of the insulation layer 3, the electric field in the winding wire 1 endings must be taken care of in order to avoid discharges in that area.

With the use of a winding wire 1 with an outer grounded conductive layer 4 it is possible to use the random-wound stator design for higher voltages without encountering problems with partial discharges adjacent to the winding wire 1. However, even if the winding wire 1 can be made free of partial discharges it is likely that partial discharges will occur at the terminations of the winding wire 1.

The outer conductive layer 4 acts as a screen, encapsulating the electrical field, and prevents in that way partial discharges in the winding wire 1. However, even if the winding wire 1 itself can be made partial discharge-free, the ends of the winding wire 1 need to be connected to a voltage supply in order to form an electrical circuit. To enable this, a certain length of the grounded outer conductive layer 4 has to be removed at the ends of the winding wire 1, which causes the electrical field to be pushed out into the surrounding air and a high electric field will occur close to the edge of the conductive layer 4. Since the insulation layer 3 is very thin, e.g. around 100-200 microns, partial discharges would occur at relatively low voltages. To address this, an end termination that can be applied to the winding wire ends is described next.

Figure 5a illustrates the electric field without using an end termination. In particular, figure 5a shows equipotential lines for the electric field created at the termination of the conductive layer 4. As can be seen in the figure, the equipotential lines are concentrated at the edge of the conductive layer 4. Beyond the edge, the conductor 2 has been stripped off, i.e. its insulation layer 3 has been removed for enabling the connection to a voltage supply.

Figure 5b illustrates the electric field when providing a proper end termination. Reference numeral 5 illustrates an end termination in the form of an end termination layer, which is applied on the insulation layer 3 on the part where the grounded outer conductive layer 4 has been removed. The equipotential lines are more evenly spread out by the end termination, and electric field concentrations are thereby avoided.

Various embodiments of such end termination are described next. The end termination reduces the local high electrical field and by that prevents partial discharges.

In some embodiments, a shrinkage tube with field grading properties can be applied to the winding wire 1 end. The location of the high electrical field is close to the ends of the winding wire 1, rendering the application of a shrinkage tube easy. The shrinkage tube may have either linear or non-linear field grading properties.

In other embodiments, a field grading paint is applied to the winding wire 1 end. Application of such field grading paint may be done by, for instance, dipping or using a brush. Non-linear resistive field grading paint may be applied in this part of the wire to avoid corona.

In still other embodiments, geometric field grading is used. For instance, by increasing the thickness of the insulation layer 3, the electrical field can be reduced considerably.

In various other embodiments, different combinations of the above mentioned embodiments are used. For instance, a field grading paint may be combined with a geometric field grading.

The winding wire 1 being provided with the conductive layer 4 provides still further advantages. When a coil winding process has been finished the coils are provided in their application, e.g. in the random-wound stator 20. Thereafter, the winding wire should be sealed against dirt and moisture and the windings should be held in place in a slot 22 to avoid abrasion from vibration. A poorly impregnated random-wound stator may fail due to dirt, oil and moisture that can be partly conductive. Further, the pinholes of the prior art insulation layer may lead to shorted turns and hence failure. According to prior art, this is solved by impregnating the random-wound stator 20 with an electrically insulating impregnation resin.

Currently, the impregnation resin for e.g. random-wound motors is made part of the insulation system, and should hence have a low electrical conductivity. A drawback of this is that the resin has a relatively high thermal resistance for transporting heat away from the conductor to the surrounding environment.

In contrast, by using a grounded winding wire 1 in the insulation system, the resin no longer needs to be electrically insulating. The resin may, for instance, have a volume resistivity in the range of 1 - 10 000 ohm cm. It is noted that the resin needs to have a certain viscosity for the impregnation process to succeed, which limits the volume resistivity that can be obtained. Therefore, to promote an enhanced cooling capability the resin can be made thermally as well as electrically conductive. This can, for instance, be accomplished by filling the resin with a conductive additive such as carbon based particles (carbon black, graphene, carbon nanotubes) or metal/metal oxide particles or other conductive materials. The thermal/electrically conductive resin also aids in securing the grounding of the grounded winding wire, especially in the end-winding area, i.e. the part of the winding which is not placed in the stator slots (sometimes denoted over-hang area).

In still another aspect, the winding wire 1 being provided with a conductive layer 4 also enables a secure grounding, as will be described next.

In today's insulation system a so-called slot-liner is a part of the insulation system for random-wound motors, and the material should therefore be electrically insulating. The thickness and material choice of the slot-liner decide the insulating capability. The slot-liner mechanically protects the insulated winding wire from being damaged from contact with stator laminations.

In contrast, when using a winding wire 1 according to the invention, the slot-liner is not needed for electrical insulation. However, the slot-liner is still needed, but to mechanically protect the outer conductive layer of the grounded winding wire 1. This slot-liner can be made much thinner compared to current slot-liners, but still being stiff for easy handling. More importantly the slot-liner should be made conductive to secure sufficient grounding of the winding wire 1 to a stator core. The volume resistivity should be selected in view of not short circuiting the stator laminates but to still give sufficient grounding of the winding wires 1. The volume resistivity may, for instance, be within the range of 1 to 1000 ohm cm.

In some embodiments, the conductive layer, the impregnation resin and slot-liner material all have essentially the same electrically insulating properties, e.g. in the range of 1 - 10 000 ohm cm.

The invention has mainly been described herein with reference to a few embodiments. However, as is appreciated by a person skilled in the art, other embodiments than the particular ones disclosed herein are equally possible within the scope of the invention, as defined by the appended patent claims.

## Claims

1. A winding wire (1) for a random-wound stator (20), the winding wire (1) comprising a conductor (2), and an insulation layer (3) surrounding the conductor (2) along a longitudinal direction thereof, **characterized by** a conductive layer (4) surrounding the insulation layer (3) along a longitudinal direction thereof, wherein the conductive layer (4) has a volume resistivity in the range of 0 - 10000 ohm cm.

2. The winding wire (1) as claimed in claim 1, wherein the conductive layer (4) has a thickness in the range of 10-100 µm, such as in the range of 20-80 µm, or in the range of 25-50 µm.

3. The winding wire (1) as claimed in claim 1 or 2, wherein the conductive layer (4) has a volume resistivity in the range of 0 - 1000 ohm cm, such as in the range of 0.1-1000 ohm cm, in the range of 1-1000 ohm cm, or in the range of 10-100 ohm cm.

4. The winding wire (1) as claimed in any of the preceding claims, wherein the conductive layer (4) is made of a semi-conductive material selected among: a polymer matrix filled with conductive additives.

5. The winding wire (1) as claimed in claim 4, wherein the conductive additives comprise one or more of: carbon based particles, metal particles and metal oxide particles.

6. The winding wire (1) as claimed in claim 3 or 4, wherein both the polymer matrix and the insulation (3) comprise a same polymer.

7. The winding wire (1) as claimed in claim 3 or 4, wherein the polymer matrix and the insulation (3) comprise different polymer.

8. The winding wire (1) as claimed in any of the preceding claims, wherein the insulation layer (3) is made of one of: polyetheretherketons, PEEK, polyetherimides, PEI, polyphenylensulfide, PPS, polyphenylensulphone, PPSU, polysulphone, PSU, polyethersulphone, PES, polytetrafloroetylene, PTFE and polyvinylidenfloride, PVF.

9. The winding wire (1) as claimed in any of the preceding claims, wherein an end of the winding wire (1) is provided with a field grading means.

10. The winding wire (1) as claimed in claim 9, wherein the field grading means comprises one or more of: a shrinkage tube with field grading means, a non-linear field grading paint, a linear field grading paint, and a geometric field grading.

11. A random-wound stator (20) comprising a stator body (21) and random wound coils (10), wherein each random wound coil (10) comprises a winding wire (1) as claimed in any of claims 1-10.

12. The random-wound stator (20) as claimed in claim 11, being impregnated by an impregnation resin comprising an electrically conductive additive.

13. The random-wound stator (12) as claimed in claim 12, wherein the resin has a volume resistivity in the range of 1 - 10 000 ohm cm.

14. The random-wound stator (20) as claimed in any of claims 11 - 13, wherein each slot (22) of the stator body (21) comprises a conductive slot liner.

15. A method (30) of manufacturing a winding wire (1) for a random-wound stator (20), the method (30) comprising:
- obtaining (31) a conductor (2),
- applying (32) an insulation layer (3) such as to surround the conductor (2) along a longitudinal direction thereof, and
- applying (33) a conductive layer (4) surrounding the insulation layer (3) with a volume resistivity in the range of 0 - 10 000 ohm cm along a longitudinal direction thereof.
